# EUROPÄISCHE PATENTSCHRIFT

(11) **EP 2 724 903 B1**
(45) Veröffentlichungstag und Bekanntmachung des Hinweises auf die Patenterteilung: **26.01.2022**
(21) Anmeldenummer: 13003398.8
(22) Anmeldetag: 04.07.2013
(51) Int. Cl.: B60T 7/02, B60T 7/12, B60T 17/22

(54) **Bremsvorrichtung für Arbeitsmaschinen und Verfahren zum Betätigen der Bremsvorrichtung**
Braking device for working machines and method for actuating the said braking device
Dispositif de freinage pour machines de travail et procédé d'actionnement du dispositif de freinage

(30) Priorität: 23.10.2012 DE 102012020818
(43) Veröffentlichungstag der Anmeldung: 30.04.2014
(73) Patentinhaber: Liebherr-Hydraulikbagger GmbH, 88457 Kirchdorf/Iller (DE)
(72) Erfinder: Meitinger, Bernhard, 87740 Buxheim (DE); Lang, Johannes, 89281 Altenstadt (DE)
(74) Vertreter: Laufhütte, Dieter

(56) Entgegenhaltungen:
- DE-A1-102011 008 707
- DE-T2- 69 825 963
- DE-T5- 10 197 080
- US-E- R E36 152

## Beschreibung

Die Erfindung betrifft eine Bremsvorrichtung für Arbeitsmaschinen und ein Verfahren zum Betätigen der Bremsvorrichtung.

Bremsvorrichtungen sind bei Fahrzeugen und mobilen Arbeitsmaschinen bekannt. Es handelt sich dabei häufig um hydraulische Steuerungs-/Regelungssysteme, welche vom Bedienpersonal der Arbeitsmaschine angesteuert werden können. In Verbindung mit elektronischen Steuerungs-/Regelungskomponenten ist es auch bekannt, hydraulische Bremsvorrichtungen mit entsprechenden Steuerungs-/Regelungskreisen zu verbinden und so die Funktionalität der Bremsvorrichtung im Vergleich zu einer lediglich manuellen Bremsvorrichtung zu erweitern.

Dies ist beispielsweise aus sogenannten Anti-Blockiersystemen bekannt, welche in verschiedensten Fahrzeugen eingesetzt werden und neben einem manuellen Zugriff des Bedienpersonals auf die Bremszylinder auch einen automatischen Zugriff auf die Bremszylinder ermöglichen. Im Falle des Anti-Blockiersystems erfolgt dieser automatische Zugriff zum Zwecke der Stabilisierung des Fahr- bzw. Bremsverhaltens des Fahrzeuges.

Die Erfindung geht von einem Stand der Technik aus, in dem ebenfalls ein elektronisches Steuerungs-/Regelungssystem auf auch manuell oder per Fußpedal ansteuerbare Hydraulikbremszylinder einwirkt. Es geht hierbei allerdings nicht um die Stabilisierung von Brems- oder Fahrverhalten einer Arbeitsmaschine, sondern um die Steuerung/Regelung des Bremsverhaltens der Arbeitsmaschine.

Zur Überwachung eines Parkzustandes der Arbeitsmaschine, in dem die Arbeitsmaschine nicht bewegt wird und die Bremsen die Räder der Arbeitsmaschine davon abhalten, ungewollt, zum Beispiel durch ein Anrollen am Berg, loszurollen, ist es bekannt, eine Recheneinheit mit einem Hydraulikbremssystem der Arbeitsmaschine zu koppeln. Diese Recheneinheit kann zum Beispiel das Bewegungsverhalten der Arbeitsmaschine überwachen. Dabei kann die Recheneinheit feststellen, ob die Arbeitsmaschine in einem Parkzustand ist, in welchem die Soll-Geschwindigkeit null ist. Wird als nächstes von der Recheneinheit festgestellt, dass die Ist-Geschwindigkeit von der Soll-Geschwindigkeit abweicht, so kann die Recheneinheit als Reaktion auf die Abweichung einen automatischen Bremsvorgang einleiten.

In einer ähnlichen Situation kann die Recheneinheit feststellen, dass sich die Arbeitsmaschine in einem Arbeitszustand befindet, in welchem die Soll-Geschwindigkeit des Fahrzeuges ebenfalls null ist. Analog zum vorgenannten Fall kann die Recheneinheit bei Feststellen einer Abweichung zwischen Soll- und Ist-Geschwindigkeit ein automatisches Bremsen bewirken.

Die bekannten Lösungen haben jedoch einige gravierende Nachteile. In den bekannten Vorrichtungen liegt in der Regel ein einkreisiger Aufbau der Bremsfunktion vor. Das heißt, dass eine Recheneinheit ein Ventil beim automatischen Bremsvorgang schaltet. Liegt nun eine Störung in der Vorrichtung vor, wie zum Beispiel eine Leckage des hydraulischen Antriebs oder ein Ventildefekt, so kann eine Fehlfunktion des automatischen Bremsvorgangs in der Regel nicht verhindert werden. Es besteht keine Möglichkeit, trotz einer Leckage oder einem Ventildefekt ein korrektes Funktionieren der Bremsfunktion zu gewährleisten.

Auch kann in den bekannten Bremsvorrichtungen nicht korrigierend auf eine fehlerhafte Bremsbetätigung reagiert werden, wodurch die Bremsen ungewollt betätigt oder gelöst werden könnten.

Eine Fehlfunktion der Bremsvorrichtung kann auch durch einen Kabelbruch hervorgerufen werden. Dies ist dann der Fall, wenn das Ventil bestromt ist und sich die Bremsen infolge einer Unterbrechung der Stromzufuhr lösen. Eine ungewollte Betätigung der Bremsen kann darüber hinaus auch über einen Plusschluss an den Ventilen hervorgerufen werden.

Dokument US R E36 152E offenbart eine Bremsvorrichtung für Arbeitsmaschinen nach dem Stand der Technik.

Vor diesem Hintergrund ist es Ziel der vorliegenden Erfindung, eine Bremsvorrichtung der eingangs genannten Art vorteilhaft weiterzubilden, insbesondere dahingehend, dass die genannten Fehlfunktionen ausgeschlossen werde oder weniger wahrscheinlich auftreten.

Diese Aufgabe wird erfindungsgemäß durch eine Bremsvorrichtung für Arbeitsmaschinen mit den Merkmalen des Patentanspruches 1 gelöst. Vorteilhafte Ausführungsformen sind Gegenstand der Unteransprüche 2 und 3. Vorgesehen ist danach eine Bremsvorrichtung für Arbeitsmaschinen, umfassend wenigstens zwei Bremsen mit wenigstens je einem Bremskreis, wobei die Bremskreise über wenigstens je ein Steuerventil betätigbar sind und die Steuerventile unabhängig voneinander ansteuerbar sind, eine Recheneinheit, von der die Steuerventile steuerbar bzw. regelbar sind, einen Bedienkreis, über den die Bremskreise manuell steuerbar bzw. regelbar sind und wenigstens eine Druckversorgung, wobei die zwei Steuerventile unter vorbestimmten Bedingungen von der Recheneinheit steuerbar bzw. regelbar sind.

Da die wenigstens zwei Bremsen jeweils wenigstens einen Bremskreis umfassen, ist sichergestellt, dass im Falle einer Leckage in einem der Bremskreise der verbleibende Bremskreis oder die verbleibenden Bremskreise weiterhin von der Recheneinheit korrekt geschaltet werden können und ein Bremsvorgang trotz einer Leckage durchführbar ist.

Es sind verschiedene Situationen denkbar, in welchen ein Bremseingriff von der Recheneinheit vorgenommen werden kann. Besonders vorteilhaft ist es, wenn die Bedingungen, unter welchen die Recheneinheit die Steuerventile ansteuert bzw. regelt, das Feststellen einer Leckage und/oder eines Losrollens der Arbeitsmaschine umfassen. Die Recheneinheit stellt dabei fest, ob sich die Arbeitsmaschine in einem Parkzustand oder einem Arbeitszustand befindet, in welchem ein Losrollen unerwünscht ist und steuert bzw. regelt entsprechend bei Feststellen einer Leckage und/oder eines ungewollten Losrollens die Bremsen so an, dass dem Losrollen entgegengewirkt wird. Dies kann auch geschehen, wenn die Arbeitsmaschine kontrolliert anfährt und die Bremsen dabei als Anfahrhilfe betätigt werden um ein ungewolltes oder verfrühtes Losrollen der Maschine zu verhindern.

Erfindungsgemäß ist wenigstens ein weiteres Ventil den wenigstens zwei Steuerventilen vorgeschaltet, wobei das weitere Ventil ein Sicherheitsventil ist und den Zulauf von Druckflüssigkeit von einer Druckflüssigkeitsquelle zu den wenigstens zwei Steuerventilen steuert bzw. regelt. Dieses weitere Ventil kann somit ein ungewolltes Betätigen der Bremsen bei einer Fehlfunktion der Steuerventile verhindern und hat deswegen die Funktion eines Sicherheitsventils. Dabei kann das Sicherheitsventil von der Recheneinheit steuerbar bzw. regelbar sein.

In einer bevorzugten Ausführungsform ist weiterhin zur Überwachung der Funktion des Sicherheitsventils ein Drucksensor zwischen dem Sicherheitsventil und den Steuerventilen vorgesehen. Dieser Drucksensor misst den Ausgangsdruck des Sicherheitsventils und kann diesen im Rahmen der Funktionsprüfung mit einem von einem anderen Drucksensor gemessenen Eingangsdruck des Sicherheitsventils oder auch mit den Eingangsdrücken der Bremsen vergleichen. Die Vergleichswerte können dann von der Recheneinheit zum Generieren von korrigierenden Steuerungs-/Regelungssignalen genutzt werden.

Da die Bremsen sowohl von der Recheneinheit über den Recheneinheitskreis als auch vom Bedienpersonal über den Bedienkreis angesteuert bzw. angeregelt werden können, ist es vorteilhaft, den Bedienkreis und den Recheneinheitskreis samt Steuerventilen miteinander zu koppeln. Erfindungsgemäß sind der Bedienkreis und die Steuerventile über je ein Wechselventil mit den wenigstens zwei Bremskreisen gekoppelt.

Die Erfindung betrifft weiter ein Verfahren zum Betätigen einer Bremsvorrichtung für

Arbeitsmaschinen mit den Merkmalen des Anspruches 4. Das Verfahren umfasst wenigstens zwei Bremsen mit wenigstens je einem Bremskreis, wobei die Bremskreise über wenigstens je ein Steuerventil betätigbar sind und die Steuerventile unabhängig voneinander ansteuerbar sind, eine Recheneinheit, von der die Steuerventile steuerbar bzw. regelbar sind, einen Bedienkreis, über den die Bremskreise manuell betätigbar sind sowie eine Druckversorgung, wobei die wenigstens zwei Steuerventile unter vorbestimmten Bedingungen von der Recheneinheit angesteuert bzw. angeregelt werden.

Dabei ist es von Vorteil, wenn die Bedingungen, unter welchen die Recheneinheit die wenigstens zwei Steuerventile ansteuert bzw. anregelt, das Feststellen einer Leckage und/oder eines Losrollens der Arbeitsmaschine umfassen.

Das Feststellen des Losrollens kann dabei auf unterschiedliche Art erfolgen. So ist es denkbar, dass bestehende Sensoren wie zum Beispiel diejenigen für die Geschwindigkeitsmessung der Arbeitsmaschine oder auch Drehzahlsensoren von Aggregaten, deren Bewegung von der Bewegung der Arbeitsmaschine abhängt, zur Feststellung eines Losrollens herangezogen werden. Es können aber genauso zusätzliche Sensoren Messwerte an die Recheneinheit übermitteln. Auf diese Art kann eine Redundanz oder eine Unabhängigkeit von bereits installierten Sensoren erreicht werden.

Erfindungsgemäß ist wenigstens ein weiteres Ventil den wenigstens zwei Steuerventilen vorgeschaltet, durch das der Zulauf von Druckflüssigkeit von einer Druckflüssigkeitsquelle zu den wenigstens zwei Steuerventilen angesteuert bzw. angeregelt werden kann. Dieses Sicherheitsventil kann die Wahrscheinlichkeit eines ungewollten Bremseingriffs reduzieren.

Erfindungsgemäß sind der Bedienkreis und die Steuerventile über je ein Wechselventil mit den wenigstens zwei Bremskreisen gekoppelt.

Weitere Einzelheiten und Vorteile der Erfindung sollen nun anhand von zwei in den Figuren dargestellten Ausführungsbeispielen näher erläutert werden. Es zeigen:
Figur 1: eine schematische Darstellung einer nicht erfindungsgemäßen Bremsvorrichtung und
Figur 2: eine schematische Darstellung einer erfindungsgemäßen Bremsvorrichtung mit Sicherheitsventil.

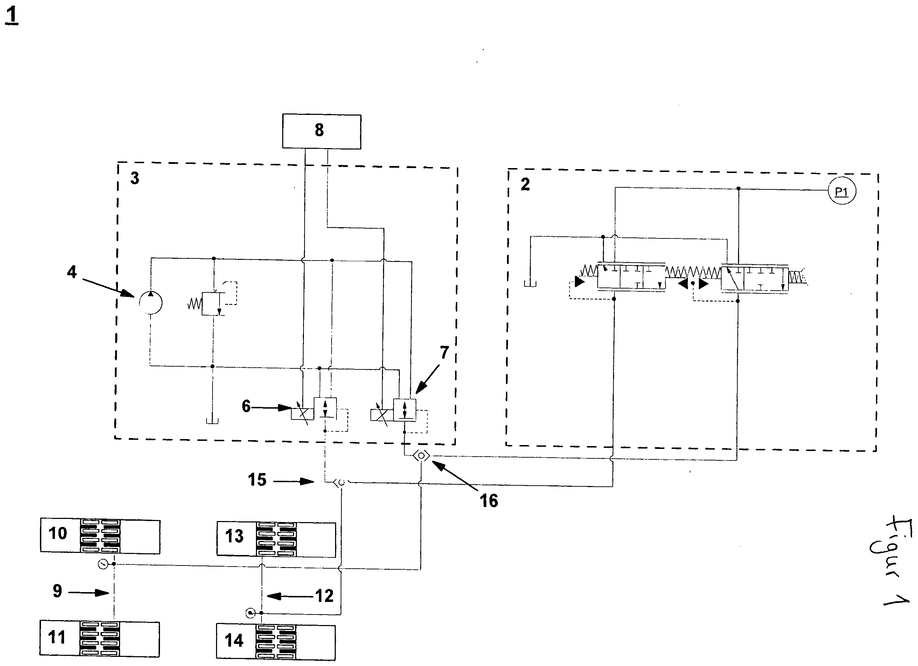

Figur 1 zeigt schematisch eine nicht erfindungsgemäße Bremsvorrichtung 1 für Arbeitsmaschinen mit einem Bedienkreis 2 und einem Recheneinheitskreis 3. In der gezeigten Ausführungsform haben die beiden Kreise unterschiedliche Druckquellen (Pumpen) 4, P1. Die Steuerventile 6, 7 des Recheneinheitskreises 3 können von der Recheneinheit 8 unter bestimmten Bedingungen angesteuert bzw. angeregelt werden. Wird zum Beispiel ein ungewolltes Losfahren der Arbeitsmaschine festgestellt, so kann dies von der Recheneinheit 8 festgestellt werden und ein Bremsvorgang als Reaktion darauf in den beiden Bremskreisen 9, 12 und damit in den Vorderbremsen 10, 11 und in den Rückbremsen 13, 14 eingeleitet werden.

Über Wechselventile 15, 16 ist der Recheneinheitskreis 3 mit dem Bedienkreis 2 und den Bremskreisen 9, 12 verbunden. Der Bedienkreis 2 wird vom Bedienpersonal zum Beispiel manuell oder per Fußpedal bedient. Durch das Bedienen des Bedienkreises 2 werden, wie im oben genannten Beispiel des Recheneinheitskreises 3 auch, sowohl die Vorderbremsen 10, 11 als auch die Rückbremsen 13, 14 betätigt.

Es ist ersichtlich, dass im Falle zum Beispiel einer Leckage im Bereich des Vorderbremsenkreises 9, der Rückbremsenkreis 12 von der Leckage nicht beeinträchtigt wird, da Vorderbremsenkreis 9 und Rückbremsenkreis 12 getrennt voneinander verlaufen. Somit kann im Falle einer Leckage in einem der Bremskreise 9, 12 zumindest in dem von der Leckage nicht betroffenen Bremskreis das Funktionieren der Bremsen gewährleistet werden.

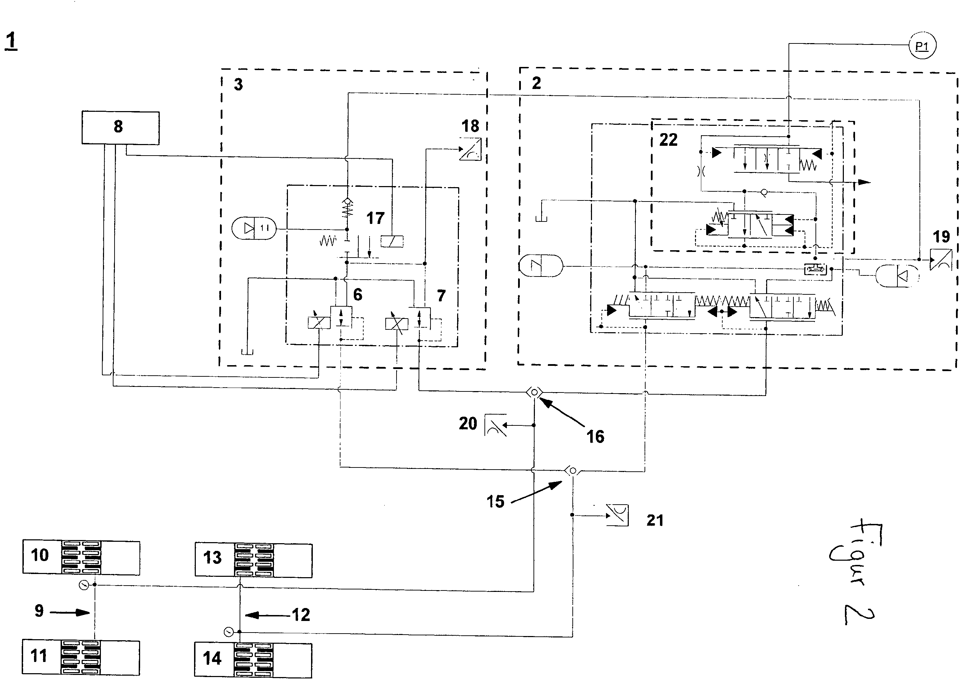

Das in Figur 2 gezeigte erfindungsgemäße Ausführungsbeispiel greift die Vorrichtung der Figur 1 auf und erweitert diese um zusätzliche Elemente.

So ist in Figur 2 den beiden bekannten Steuerventilen 6, 7 ein Sicherheitsventil 17 vorgeschaltet. Dieses Sicherheitsventil 17 reduziert die Wahrscheinlichkeit einer ungewollten Bremsung dadurch, dass eine fehlerhaft bremsende Einstellung der Steuerventile 6, 7 nun nicht mehr hinreichendes Kriterium zum Erfolgen einer fehlerhaften Bremsung ist. Da das Sicherheitsventil 17 im gezeigten Ausführungsbeispiel die Zufuhr von Druckflüssigkeit zu den Steuerventilen 6, 7 unterbindet, müsste zum Erfolgen einer fehlerhaften Bremsung zusätzlich zu den Steuerventilen 6, 7 gleichzeitig das Sicherheitsventil 17 fehlerhaft geschaltet sein. Dies ist unwahrscheinlicher als ein fehlerhaftes Bremsen nur eines Ventilelementes. Durch das zusätzliche Sicherheitsventil 17 wird dementsprechend die Wahrscheinlichkeit eines fehlerhaften Bremsvorgangs reduziert.

Über entsprechend platzierte Drucksensoren 18, 19, 20, 21 kann die Recheneinheit 8 das korrekte Funktionieren der Ventile und insbesondere des Sicherheitsventils 17 überwachen. In der gezeigten Ausführungsform weist der Bedienkreis 2 außerdem zusätzliche Ventile 22 auf, die die Speicher-/Ladefunktion zum Aufladen eines im System enthaltenen Hydraulikspeichers 23 ermöglichen.

Das Ausführungsbeispiel in Figur 2 weist im Unterschied zum zuvor gezeigten Beispiel die selbe Druckquelle P1 für sowohl den Bedienkreis 2 als auch den Recheneinheitskreis 3 auf.

## Patentansprüche

1. Bremsvorrichtung (1) für Arbeitsmaschinen, umfassend wenigstens zwei Bremsen (10, 13, 11, 14) mit wenigstens je einem Bremskreis (9, 12), wobei die Bremskreise (9, 12) über wenigstens je ein Steuerventil (6, 7) betätigbar sind und die Steuerventile (6, 7) unabhängig voneinander ansteuerbar sind, eine Recheneinheit (8), von der die Steuerventile (6, 7) steuerbar bzw. regelbar sind, einen Bedienkreis (2), über den die Bremskreise (9, 12) manuell steuerbar bzw. regelbar sind und wenigstens eine Druckversorgung (p1), wobei die zwei Steuerventile (6, 7) unter vorbestimmten Bedingungen von der Recheneinheit (8) steuerbar bzw. regelbar sind und wobei der Bedienkreis (2) und die Steuerventile (6, 7) über je ein Wechselventil (15, 16) mit den wenigstens zwei Bremskreisen (9, 12) gekoppelt sind, **dadurch gekennzeichnet, dass** wenigstens ein weiteres Ventil (17) den wenigstens zwei Steuerventilen (6, 7) vorgeschaltet ist, das ein Sicherheitsventil ist und den Zulauf von Druckflüssigkeit von einer Druckflüssigkeitsquelle zu den wenigstens zwei Steuerventilen (6, 7) steuert bzw. regelt, wobei das Sicherheitsventil (17) von der Recheneinheit (8) steuerbar bzw. regelbar ist.

2. Bremsvorrichtung für Arbeitsmaschinen nach Anspruch 1, **dadurch gekennzeichnet, dass** die Bedingungen das Feststellen einer Leckage und/oder eines Losrollens der Arbeitsmaschine umfassen.

3. Bremsvorrichtung für Arbeitsmaschinen nach Anspruch 1 oder 2, **dadurch gekennzeichnet, dass** zur Überwachung der Funktion des Sicherheitsventils (17) ein Drucksensor (18) zwischen dem Sicherheitsventil (17) und den Steuerventilen (6, 7) vorgesehen ist.

4. Verfahren zum Betätigen einer Bremsvorrichtung (1) für Arbeitsmaschinen, umfassend wenigstens zwei Bremsen (10, 13, 11,14) mit wenigstens je einem Bremskreis (9, 12), wobei die Bremskreise (9, 12)über wenigstens je ein Steuerventil (6, 7) betätigbar sind und die Steuerventile (6, 7) unabhängig voneinander ansteuerbar sind, eine Recheneinheit (8), von der die Steuerventile (6, 7) steuerbar bzw. regelbar sind, einen Bedienkreis (2), über den die Bremskreise (9, 12) manuell betätigbar sind und eine Druckversorgung, wobei die wenigstens zwei Steuerventile (6, 7) unter vorbestimmten Bedingungen von der Recheneinheit (8) angesteuert bzw. angeregelt werden und wobei der Bedienkreis (2) und die Steuerventile (6, 7) über je ein Wechselventil (15, 16) mit den wenigstens zwei Bremskreisen (9, 12) gekoppelt sind, **dadurch gekennzeichnet, dass** wenigstens ein weiteres Ventil (17) den wenigstens zwei Steuerventilen (6, 7) vorgeschaltet ist, das ein Sicherheitsventil ist und den Zulauf von Druckflüssigkeit von einer Druckflüssigkeitsquelle (p1) zu den wenigstens zwei Steuerventilen (6, 7) steuert bzw. regelt, wobei das Sicherheitsventil (17) von der Recheneinheit (8) gesteuert bzw. geregelt wird.

5. Verfahren nach Anspruch 4, **dadurch gekennzeichnet, dass** die Bedingungen das Feststellen einer Leckage oder eines Losrollens der Arbeitsmaschine umfassen.

## Claims

1. A braking apparatus (1) for work machines comprising at least two brakes (10, 13, 11, 14) each having at least one braking circuit (9, 12), wherein the braking circuits (9, 12) can be actuated via at least one control valve (6, 7) each and the control valves (6, 7) can be controlled independently of one another; a processing unit (8) by which the control valves (6, 7) can be controlled or regulated; an operating circuit (2) via which the braking circuits (9, 12) can be controlled or regulated manually; and at least one pressure supply (p1), wherein the at least two control valves (6, 7) are controlled or regulated under predetermined conditions by the processing unit (8), and wherein the at least two control valves (6, 7) are controlled or regulated under predetermined conditions by the processing unit (8), and wherein the operating circuit (2) and the control valves (6, 7) are coupled to the at least two braking circuits (9, 12) via one respective shuttle valve (15, 16) each, **characterized in that** at least one further valve (17) is connected upstream of the at least two control valves (6, 7), said further valve (17) being a safety valve and controlling or regulating the inflow of hydraulic fluid from a hydraulic fluid source to the at least two control valves (6, 7), with the safety valve (17) being able to be controlled or regulated by the processing unit (8).

2. A braking apparatus for work machines in accordance with claim 1, **characterized in that** the conditions include the determining of a leak and/or of a rolling away of the work machine.

3. A braking apparatus for work machines in accordance with claim 1 or claim 2, **characterized in that** a pressure sensor (18) is provided between the safety valve (17) and the control valves (6, 7) for monitoring the function of the safety valve (17).

4. A method of actuating a braking apparatus (1) for work machines comprising at least two brakes (10, 13, 11, 14) each having at least one braking circuit (9, 12), wherein the braking circuits (9, 12) can be actuated via at least one control valve (6, 7) each and the control valves (6, 7) can be controlled independently of one another; a processing unit (8) by which the control valves (6, 7) can be controlled or regulated; an operating circuit (2) via which the braking circuits (9, 12) can be controlled or regulated manually; and a pressure supply, wherein the at least two control valves (6, 7) are controlled or regulated under predetermined conditions by the processing unit (8), and wherein the operating circuit (2) and the control valves (6, 7) are coupled to the at least two braking circuits (9, 12) via one respective shuttle valve (15, 16) each, **characterized in that** at least one further valve (17) is connected upstream of the at least two control valves (6, 7), said further valve (17) being a safety valve and controlling or regulating the inflow of hydraulic fluid from a hydraulic fluid source (p1) to the at least two control valves (6, 7), with the safety valve (17) being be controlled or regulated by the processing unit (8).

5. A method in accordance with claim 4, **characterized in that** the conditions include the determining of a leak or a rolling away of the work machine.

## Revendications

1. Dispositif de freinage (1) pour machines de travail, comprenant au moins deux freins (10, 13, 11, 14) avec au moins respectivement un circuit de freinage (9, 12), les circuits de freinage (9, 12) pouvant être actionnés par le biais d'au moins respectivement une soupape de commande (6, 7) et les soupapes de commande (6, 7) pouvant être commandées indépendamment les unes des autres, une unité de calcul (8), par laquelle les soupapes de commande (6, 7) peuvent être commandées ou régulées, un circuit de commande (2), par le biais duquel les circuits de freinage (9, 12) peuvent être commandés ou régulés manuellement et au moins une alimentation en pression (p1), les deux soupapes de commande (6, 7) pouvant être commandées ou régulées par l'unité de calcul (8) dans des conditions prédéfinies et le circuit de commande (2) et les soupapes de commande (6, 7) étant couplés aux au moins deux circuits de freinage (9, 12) par le biais de respectivement une soupape à deux voies (15, 16), **caractérisé en ce qu'**au moins une autre soupape (17) est placée en amont des au moins deux soupapes de commande (6, 7), laquelle est une soupape de sécurité et commande ou régule l'alimentation de fluide sous pression depuis une source de fluide sous pression jusqu'aux au moins deux soupapes de commande (6, 7), la soupape de sécurité (17) pouvant être commandée ou régulée par l'unité de calcul (8).

2. Dispositif de freinage pour machines de travail selon la revendication 1, **caractérisé en ce que** les conditions comprennent la détection d'une fuite et/ou du fait que la machine de travail se mette à rouler.

3. Dispositif de freinage pour machines de travail selon la revendication 1 ou 2, **caractérisé en ce que**, pour la surveillance du fonctionnement de la soupape de sécurité (17), un capteur de pression (18) est prévu entre la soupape de sécurité (17) et les soupapes de commande (6, 7).

4. Procédé d'actionnement d'un dispositif de freinage (1) pour machines de travail, comprenant au moins deux freins (10, 13, 11, 14) avec au moins respectivement un circuit de freinage (9, 12), les circuits de freinage (9, 12) pouvant être actionnés par le biais d'au moins respectivement une soupape de commande (6, 7) et les soupapes de commande (6, 7) pouvant être commandées indépendamment les unes des autres, une unité de calcul (8), par laquelle les soupapes de commande (6, 7) peuvent être commandées ou régulées, un circuit de commande (2), par le biais duquel les circuits de freinage (9, 12) peuvent être actionnés manuellement et une alimentation en pression, les au moins deux soupapes de commande (6, 7) étant commandées ou régulées par l'unité de calcul (8) dans des conditions prédéfinies et le circuit de commande (2) et les soupapes de commande (6, 7) étant couplés aux au moins deux circuits de freinage (9, 12) par le biais de respectivement une soupape à deux voies (15, 16), **caractérisé en ce qu'**au moins une autre soupape (17) est placée en amont des au moins deux soupapes de commande (6, 7), laquelle est une soupape de sécurité et commande ou régule l'alimentation de fluide sous pression depuis une source de fluide sous pression (p1) jusqu'aux au moins deux soupapes de commande (6, 7), la soupape de sécurité (17) étant commandée ou régulée par l'unité de calcul (8).

5. Procédé selon la revendication 4, **caractérisé en ce que** les conditions comprennent la détection d'une fuite ou du fait que la machine de travail se mette à rouler.
